# EUROPEAN PATENT APPLICATION

(11) **EP 4 538 330 A1**
(43) Date of publication of application: **16.04.2025**
(21) Application number: 23203003.1
(22) Date of filing: 11.10.2023
(51) Int. Cl.: C09D 5/00

(54) **A THERMALLY DEBONDABLE PRIMER COMPOSITION**

(71) Applicant: Henkel AG & Co. KGaA, 40589 Düsseldorf (DE)
(72) Inventor: O'Dwyer, Pat, Newcastle, Co. Dublin, D22KP70 (IE); Migliore, Nicola, 40227 Düsseldorf (DE); Kohlstrung, Rainer, 68723 Plankstadt (DE); Franken, Uwe, 41542 Dormagen (DE); Clarke, Greg, Dublin (IE)

(57) **Abstract**

The present invention relates to a thermally debondable primer composition comprising a polyether urethane methacrylate resin; two or more (meth)acrylate monomers; thermally expandable thermoplastic microspheres; and one or more photoinitiator.

## Description

### Technical field of the invention

The present invention relates to an UV-curable and a thermally debondable primer composition.

### Technical background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates. Further, use of thermally expandable microspheres may have a negative impact on mechanical and adhesion strength properties of the adhesive.

Noting these problems, certain authors have also sought to develop debondable adhesive compositions, wherein the passage of an electrical current through the cured compositions acts to disrupt the bonding at the interface of the adhesive and the substrate.

Therefore, there remains a need in the art to provide means to effectively debond bonded substrates while maintaining optimum adhesion and mechanical properties of the adhesive.

### Summary of the invention

The present invention relates to a thermally debondable primer composition comprising a) a polyether urethane methacrylate resin; b) two or more (meth)acrylate monomers; c) thermally expandable thermoplastic microspheres; and d) one or more photoinitiator.

The present invention also relates to a cured thermally debondable primer composition according to the present invention, wherein the thermally debondable primer composition is cured via photo-curing.

The present invention also relates to use of thermally debondable primer composition or cured product according to the present invention in a bonded structure.

The present invention encompasses a bonded structure comprising: a first substrate; a second substrate; a thermally debondable primer composition layer or cured product layer according to the present invention; and an adhesive layer, wherein the thermally debondable primer is disposed on a surface of the first substrate and/or on a surface of the second substrate and wherein the adhesive layer is placed on top of the thermally debondable primer layer.

A method of debonding the bonded structure according to the present invention, the method comprising the steps of: i) applying a heat; and, ii) debonding the surfaces.

### Short description of the figures

Figure 1 illustrates Tensile Lap Shear Strength of TEROSON EP 5065 on KTL steel specimens in the range of temperature -40°C/130°C.
Figure 2 illustrates the debonding efficiency of the composition 1 via tensile lap shear strength of TEROSON EP 5065 on e-coated steel specimens.
Figure 3 illustrates testing set-up to monitor temperatures of the battery box during debonding process.
Figure 4 illustrates change of the battery cell temperature during the debonding phase using a structural adhesive (TEROSON EP 5065).
Figure 5 illustrates change of the battery cell temperature during the debonding phase using a TCA.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term *"consisting of*" excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein the term *"debondable"* means that, after curing of the primer, the bond strength can be weakened by at least 50% upon application of heat of from 60 to 200°C for a duration of from 2 to 60 minutes. The cured primer and an adhesive are applied between two substrates which are bonded by the adhesive. Bond strength is measured by Tensile Lap Shear (TLS) test performed at room temperature and based upon ISO 4587. The bond overlapping area was 25 mm x 10 mm with a bond thickness of about 150 µm.

As used herein, the term *"monomer"* refers to a substance that can undergo a polymerization reaction to contribute constitutional units to the chemical structure of a polymer. The term "*monofunctionaf*", as used herein, refers to the possession of one polymerizable moiety. The term "*polyfunctional*", as used herein, refers to the possession of more than one polymerizable moiety.

As used herein, "*(meth)acryf*" is a shorthand term referring to "*acryf*" and/or "*methacryl*". Thus, the term *"(meth)acrylamide"* refers collectively to acrylamide and methacrylamide.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skills in the art to which this invention belongs to. By means of further guidance, term definitions are included to better appreciate the teaching of the present invention.

The present invention relates to a thermally debondable primer composition comprising a) a polyether urethane methacrylate resin; b) two or more (meth)acrylate monomers; c) thermally expandable thermoplastic microspheres; and d) one or more photoinitiator.

The Applicant has found out that the thermally debondable primer composition according to the present invention provides excellent debonding properties and can be easily peeled off from the substrate, in particular for e-coated steel.

The thermally debondable primer composition according to the present invention comprises a polyether urethane methacrylate resin.

Preferably, the polyether urethane methacrylate resin is derived from polyether polyol, hydrogenated bisphenol A and 2,4-toluene diisocyanate with methacrylate functionality.

The polyether urethane methacrylate resin may be present in a thermally debondable primer composition according to the present invention in a quantity of from 30 to 55% by weight of the total weight of the composition, preferably from 35 to 50% and more preferably from 37 to 47%.

The above defined and preferred ranges are ideal for a film formation. Quantities below 30% may lead to a poor film formation, whereas too high quantities, more than 55% may lead to a high viscose composition, that may be difficult to process.

The composition according to the present invention comprises two or more (meth)acrylate monomers.

(Meth)acrylate monomers suitable for use as the (meth)acrylate component in the present invention may be selected from a wide variety of materials, such as those represented by

H₂C=CGCO₂R¹,

wherein
G may be hydrogen, halogen or alkyl groups having from 1 to 4 carbon atoms, and
R¹ may be selected from alkyl, cycloalkyl, alkenyl, cycloalkenyl, alkaryl, alkaryl or aryl groups having from 1 to 16 carbon atoms, any of which may be optionally substituted or interrupted as the case may be with silane, silicon, oxygen, halogen, carbonyl, hydroxyl, ester, carboxylic acid, urea, urethane, carbonate, amine, amide, sulfur, sulfonate, sulfone and the like.

Preferably the two or more (meth)acrylate monomers are selected from the group consisting of butyl (meth)acrylate, pentyl (meth)acrylate, hexyl (meth)acrylate, heptyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobutyl (meth)acrylate, isopentyl (meth)acrylate, isohexyl (meth)acrylate, isoheptyl (meth)acrylate, isooctyl (meth)acrylate, 2-ethylhexyl (meth)acrylate, sec-butyl (meth)acrylate, 1-methylbutyl (meth)acrylate, 1-ethylpropyl (meth)acrylate, tetrahydrofurfuryl (methacrylate), isobornyl (meth)acrylate, alkoxylated tetrahydrofurfuryl (meth)acrylate, cyclic trimethylolpropane formal acrylate, 2-phenoxyethyl (meth)acrylate, alkoxylated nonylphenol acrylate, alkoxylated phenol acrylate, 2-(2-ethoxyethoxy) ethyl (meth)acrylate, alkoxylated lauryl acrylate, stearyl (meth)acrylate, isodecyl (meth)acrylate, caprolactone (meth)acrylate, methoxy polyethylene glycol (350) monoacrylate and methoxy polyethylene glycol (550) monoacrylate, polyethylene glycol di(meth)acrylate, tetrahydrofuran (meth)acrylate, hydroxypropyl (meth)acrylate, hydroxyethyl (meth)acrylate, (meth)acrylic acid, itaconic acid, hexanediol di(meth)acrylate, trimethylol propane tri(meth)acrylate, diethylene glycol dimethacrylate, triethylene glycol dimethacrylate, tetraethylene glycol di(meth)acrylate, dipropylene glycol di(meth)acrylate, di-(pentamethylene glycol) di(meth)acrylate, tetraethylene diglycol di(meth)acrylate, diglycerol tetra(meth)acrylate, tetramethylene di(meth)acrylate, ethylene di(meth)acrylate, neopentyl glycol di(meth)acrylate, ethoxylated bisphenol-A (meth)acrylate, and mixtures thereof, preferably selected from the group consisting of isobornyl (meth)acrylate, hydroxyethyl (meth)acrylate, (meth)acrylic acid, itaconic acid, and mixtures thereof, and more preferably selected from isobornyl (meth)acrylate, hydroxyethyl (meth)acrylate, (meth)acrylic acid, and mixtures thereof.

In a highly preferred embodiment, the two or more (meth)acrylate monomers are isobornyl acrylate, acrylic acid and hydroxyethyl methacrylate.

The preferred monomers provide good bonding to non-metal and/or metal substrates, and therefore, provide optimised metal to polymer bonding.

Suitable commercially available (meth)acrylate monomers for use in the present invention include but are not limited to isobornyl acrylate from OSAKA and hydroxyethyl methacrylate from GEO.

The two or more (meth)acrylate monomers may be present in the thermally debondable primer composition according to the present invention in a quantity of from 20 to 50% by weight of the total weight of the composition, preferably from 25 to 45%, preferably from 27 to 41% and more preferably from 30 to 38%.

These preferred quantities are preferred because too high quantity may lead too rigid composition, whereas too low quantities may lead to poor curing rate.

The composition according to the present invention comprises thermally expandable thermoplastic microspheres.

Suitable thermally expandable thermoplastic microspheres have a core-shell structure, and wherein the shell is formed from cross-linked polymer and the core is composed of a blowing agent.

Suitable cross-linked polymer may be prepared by (co)polymerization of any suitable monomers or comonomers. Suitable monomer that can be used for preparing the polymer includes non-ionic ethylenically unsaturated monomers.

Suitable non-ionic ethylenically unsaturated monomers for use in the present invention can be selected from the group consisting of styrene, vinyltoluene, ethylene, butadiene, vinyl acetate, vinyl chloride, vinylidene chloride, acrylonitrile, acrylamide, methacrylamide, C1-C20 alkyl or C2-C20 alkenyl esters of acrylic or methacrylic acid, methacrylate, methyl methacrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, oleyl acrylate, oleyl methacrylate, palmityl acrylate, palmityl methacrylate, stearyl acrylate, stearyl methacrylate, hydroxyl-containing monomers, in particular C1-C10 hydroxyalkyl (meth)acrylates, such as hydroxyethyl (meth)acrylate, hydroxypropyl (meth)acrylate, glycidyl (meth)acrylate, preferably methyl methacrylate and mixtures thereof.

Suitable polymer may also be a copolymer prepared by the copolymerization of two or more monomers listed above. Preferred monomer combinations include acrylonitrile/methyl (meth)acrylate, styrene/methyl (meth)acrylate, acrylamide/methyl (meth)acrylate, acrylonitrile/hydroxyethyl (meth)acrylate. More preferably combination is acrylonitrile/methyl methacrylate.

Suitable crosslinking agents for use in the present invention for the crosslinking of the polymer are compounds having two or more ethylenically unsaturated groups, for example diacrylates or dimethacrylates of at least dihydric saturated alcohols, e.g., ethylene glycol diacrylate, ethylene glycol dimethacrylate, 1,2-propylene glycol diacrylate, 1,2-propylene glycol dimethacrylate, 1,4-butanediol diacrylate, 1,4-butanediol dimethacrylate, hexanediol diacrylate, hexanediol dimethacrylate, neopentylglycol diacrylate, neopentylglycol dimethacrylate, 3-methylpentanediol diacrylate and 3-methylpentanediol dimethacrylate. A further class of crosslinkers comprises diacrylates or dimethacrylates of polyethylene glycols or polypropylene glycols having molecular weights of 200 to 9000 in each case. Polyethylene and/or polypropylene glycols used for preparing the diacrylates or dimethacrylates preferably have a molecular weight of 400 to 2000 each. Not only the homopolymers of ethylene oxide and/or propylene oxide can be used, but also block copolymers of ethylene oxide and propylene oxide, or random copolymers of ethylene oxide and propylene oxide, which comprise a random distribution of the ethylene oxide and propylene oxide units. Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

Crosslinkers are preferably used in amounts of 0.1 to 30%, based on the monomers to be polymerized in any one stage.

The core is preferably composed of physical blowing agent. Suitable physical blowing agent includes alkanes and/or cycloalkanes with at least 4 carbon atoms, dialkyl ethers, esters, ketones, acetals, fluoroalkanes with 1 to 8 carbon atoms, and tetraalkylsilanes with 1 to 3 carbon atoms in the alkyl chain, in particular tetramethylsilane.

Examples of suitable blowing agents usable according to the invention, propane, n-butane, iso- and cyclobutane, n-, iso- and cyclopentane, cyclohexane, dimethyl ether, methyl ethyl ether, methyl butyl ether, methyl formate and acetone may be mentioned, and also fluoroalkanes which can be degraded in the troposphere and thus are harmless to the ozone layer, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane, and perfluoroalkanes such as CsFs, C₄F₁₀, C₅F₁₂, CeFi4 and C₇F₁₆. Said blowing agents can be used alone or in any combination with one another.

Further, hydrofluoro olefins, such as 1,3,3,3-tetrafluoropropene, or hydrochlorofluoro olefins, such as 1-chloro-3,3,3-trifluoropropene, can be used as blowing agents.

In a preferred embodiment, the physical blowing agents are hydrocarbons, preferably, selected from the group consisting of alkanes and/or cycloalkanes with at least four carbon atoms. In particular, pentanes, preferably isopentane and cyclopentane, are used. With the use of the rigid foams as insulation in cooling appliances, cyclopentane is preferred. The hydrocarbons can be used in mixture with water.

The thermally expandable microspheres can be prepared by seed swelling of the crosslinked polymer and encapsulation of the blowing agents.

The thermally expandable thermoplastic microspheres have a particle size from 5 to 100 µm, preferably from 8 to 75 µm, preferably from 9 to 50 µm, more preferably from 10 to 30 µm, more preferably from 12 to 20 µm, and even more preferably from 13 to 19 µm, wherein the particle size is measure by laser diffraction (Low Angle Laser Light Scattering LALLS).

The above-defined particle size ranges are sizes before the expansion.

The thermally expandable thermoplastic microspheres expand when they are exposed to a heat, preferably when exposed to a heat of from 60 to 200°C, preferably from 80 to 160 °C, more preferably from 80 to 120°C.

The heat source may be for example a thermal source, a sonication probe or an electromagnetic source.

Suitable commercially available thermally expandable thermoplastic microsphere for use in the present invention include but is not limited to Expancel 031DU40 from Nouryon.

The thermally expandable thermoplastic microspheres are present in a thermally debondable primer composition according to the present invention in a quantity of from 5 to 30% by weight based on the total weight of the composition, preferably from 10 to 27%, preferably from 12 to 25% and more preferably from 14 to 22%.

The above defined and preferred ranges are ideal to break the bond line while maintaining low solid content in the composition. Quantities less than 5% may not lead to a complete bond break, whereas too high quantities may increase the solid content too high without providing any additional technical benefit.

The composition according to the present invention comprises one or more photoinitiators.

Suitable photoinitiators for use in the present invention are active in the UV/visible range, approximately 250-850 nm, or some segment thereof. More suitably, the photoinitiators used in the present invention are active in the UV/visible range, approximately 250-850 nm, and preferably in the range of 300 to 450 nm so that the compositions can be cured by exposure to low intensity UV.

Preferably the one or more photoinitiators are selected from the group consisting of 1-hydroxycyclohexyl phenyl ketone, ethyl phenyl benzoyl phosphinate, 2-hydroxy-2-methyl-1-phenyl-propan-1-one, bis(2,4,6-trimethylbenzoyl)-phenylphosphineoxide, 1-hydroxy-cyclohexyl-phenyl-ketone, 2,4,6-trimethylbenzoyl-diphenyl-phosphineoxide, 2-methyl-1-[4-(methylthio)phenyl]-2-morpholino propan-1-one, 2-benzyl-2-N,N-dimethylamino- 1-(4-morpholinophenyl)-1-butanone, combination of 1-hydroxy cyclohexyl phenyl ketone and benzophenone, 2,2-dimethoxy-2-phenyl acetophenone, 2-hydroxy-2-methyl-1-phenyl-1-propane, combination of 2,4,6-trimethylbenzoyldiphenyl-phosphine oxide and 2-hydroxy-2-methyl-1-phenyl-propan-1-one, 1-[4-(2-hydroxyethoxy)-phenyl]-2-hydroxy-2-methyl-1-propane-1-one, combination of 50 wt. % of diphenyl (2,4,6-trimethylbenzoyl) phosphine oxide and 50 wt. % of2-hydroxy-2-methyl-1-phenyl-1 -propanone, combination of bis(2,6-dimethoxybenzoyl-2,4,4-trimethylpentyl)phosphine oxide and 2-hydroxy-2-methyl-1-phenyl-propan-1-one, bis(η<5>-2,4-cyclopentadien-1-yl)-bis[2,6-difluoro-3-(1H-pyrrol-1-yl)phenyl]titanium, 2-benzyl-2-N,N-dimethylamino-1-(4-morpholinophenyl)-1-butanone, dl-camphorquinone, and mixtures thereof, preferably selected from ethyl phenyl benzoyl phosphinate, 1-hydroxycyclohexyl phenyl ketone, 2-hydroxy-2-methyl-1-phenyl-propan-1-one, bis(2,4,6-trimethylbenzoyl)-phenylphosphineoxide, 1-hydroxy-cyclohexyl-phenyl-ketone, 2,4,6-trimethylbenzoyl-diphenyl-phosphineoxide, and mixtures thereof, and more preferably selected from ethyl phenyl benzoyl phosphinate, 1-hydroxycyclohexyl phenyl ketone and mixtures thereof.

These photoinitiators are preferred because they provide a good combination of surface and cure through depth, and in addition, they provide good UV and visual LED cure.

Suitable commercially available photoinitiator for use in the present invention include but is not limited to Omnirad 184 and Omnirad TPO-L from IGM Resins.

The one or more photoinitiators are present in the thermally debondable primer composition according to the present invention in a quantity of from 0.5 to 10 % by weight based on the total weight of the composition, preferably from 1.25 to 8%, more preferably from 1.5 to 5%.

These quantities are preferred because quantities less than 0.5% may lead to a poor cure, whereas too high quantities, more than 10%, may lead to a loss of mechanical properties and pre-mature polymerisation, short chain length and termination prior to cross-linking.

The composition according to the present invention may further comprise an adhesion promoter.

Adhesion promoters act at the interface between an organic adhesive material and an organic/inorganic substrate to enhance adhesion between the two materials. The two materials often differ in ways that makes forming a strong adhesive bond between them difficult, e.g., differences in compatibility, chemical reactivity, surface properties, and coefficient of thermal expansion. An adhesion promoter acts to bond these dissimilar materials chemically and physically into a strong cohesive bond structure. Adhesion promoters can impart resistance to environmental and other destructive forces, such as heat and moisture, which often act on the bonded site to destroy adhesive strength.

Preferably, the adhesion promoter is selected from the group consisting of glycidoxypropyltrimethoxysilane, acrylic acid, γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and 8-glycidooxy-n-octyl trimethoxysilane, and mixtures thereof, preferably the difunctional adhesion promoter is selected from the group consisting of glycidoxypropyltrimethoxysilane, acrylic acid and mixtures thereof.

Suitable commercially available adhesion promoters for use in the present invention include but are not limited to acrylic acid glacial from BASF and Silquest A 187 from Momentive.

The adhesion promoter may be present in the thermally debondable primer composition according to the present invention in a quantity of from 0.5 to 8% by weight of the total weight of the composition, preferably from 0.75 to 5%, and more preferably from 0.75 to 3%.

The above selected ranges provide ideal adhesion promotion, further, if the quantity of the adhesion promoter is more than 8%, it may negatively affect to the curing performance.

The thermally debondable primer composition according to the present invention may further comprise adjuvants and additives that can impart improved properties to this composition. For instance, the adjuvants and additives may impart one or more of: improved elastic properties; improved elastic recovery; longer enabled processing time; faster curing time; film forming properties, and lower residual tack.

Adjuvants and additives for use in the present invention may be selected from the group consisting of fillers, extenders, dye, binders, crosslinkers, stabilizers, solvents, rheology modifiers, dispersing agents, fungicides, bactericides, algaecides and mixtures thereof.

Suitable filler for use in the present invention is for example titanium oxide.

Extenders suitable for use in the present invention are used to improve adhesion and strengthen the film. Non limiting examples of suitable extenders for use in the present invention are aluminium silicate, silica, barium sulphate, manganese aluminium silicate, sodium magnesium aluminium silicate, calcium carbonate, calcium sulphate, diatomaceous earth, carbon black, mica and mixtures thereof.

Suitable solvent for use in the present invention is mainly to improve liquid properties and drying characteristics of the primer composition. Suitable solvent for use in the present invention is for example isopropyl alcohol.

Suitable cross linkers may be used to modify the properties of the primer composition, for example to improve environmental resistance. Suitable cross linkers for use in the present invention are for example isocyanates, aziridines and cyanurates.

Suitable dispersants can be used to separate and stabilise the particles. Suitable dispersant for use in the present invention for example hydrophobic acrylic copolymer pigment dispersant such as Orotan 681 from Dow.

Such adjuvants and additives can be used in such combination and proportions as desired, provided they do not adversely affect the nature and essential properties of the composition. While exceptions may exist in some cases, these adjuvants and additives should not in toto comprise more than 30% of the total composition and preferably should not comprise more than 10% of the composition.

The thermally debondable primer composition according to the present invention may be prepared by adding all components a container and mixing for example by a speed mixer.

The thermally debondable primer composition according to the present invention may be applied on to a surface of a substrate by any available means to form a film. The primer composition may be applied by using a brushing technique or by using a bar-coater with a guide. The guide of the bar-coater may be 50-micron, 100-micron or even beyond 200-micron guide, preferably, the primer composition is applied by using a bar-coater with 100-micron guide.

Thickness of the thermally debondable primer composition layer on a substrate may be from 20 µm to 300 µm, preferably from 30 µm to 175 µm and more preferably from 45 µm to 150 µm.

Above listed thicknesses are for a wet layer, whereas the thickness of a dry layer is about half of the wet layer thickness.

These thicknesses are ideal because they enable the deposition of the microparticles, and in addition may facilitate the peeling of the primer layer from a substrate during expansion of the thermally expandable thermoplastic microspheres.

The present invention relates to a cured thermally debondable primer composition according to the present invention.

The thermally debondable primer composition according to the present invention may be cured by applying UV light with a lamp at 365nm with an intensity of from 20 to 500mW/cm², wherein the cure time may be adjusted appropriately depending on the intensity.

In a preferred embodiment, the thermally debondable primer composition according to the present invention is cured by applying UV light for 150 seconds with a lamp at 365nm with an intensity of 320mW/cm².

The thermally debondable primer composition or cured product according to the present invention can be used in a bonded structure.

Examples of bonded structures are automotive components such as a battery, a casque and interior parts.

The present invention relates to a bonded structure comprising: a first substrate; a second substrate; a thermally debondable primer composition layer or cured product layer according to the present invention and an adhesive layer, wherein the thermally debondable primer is disposed on a surface of the first substrate and/or on a surface of the second substrate and wherein the adhesive layer is placed on top of the thermally debondable primer layer.

The first and second substrates can be same or different and not limited to any particular substrate material. However, suitable substrate should have a temperature stability below debonding temperature and melting point above 100°C.

The adhesive layer of the bonded structure according to the present invention may be formed from any kind of adhesive suitable to adhere selected substrates. Suitable adhesive may be one component (1k) composition or a two component (2k) composition. Preferably the adhesive layer is formed from an adhesive selected from the group consisting of epoxy adhesives, acrylic adhesives, polyurethane adhesives, cyanoacrylate adhesives, silicone adhesives, polyimide adhesives, silane modified polymers, butyls, hotmelts and mixtures thereof.

The present invention also relates to a method of debonding the bonded structure according to the present invention, the method comprising the steps of: i) applying a heat; and, ii) debonding the surfaces.

The heat source may be a thermal source, a sonication probe or an electromagnetic source.

In the debonding method the temperature applied in step i) is from 60 to 200°C, and it is preferably applied for a duration of from 2 minutes to 60 minutes.

The thermally debondable primer composition according to the present invention may be used in various e-mobility components, such as a battery lid, battery cells (cell-to-cell, cell-to-module, cell-to-body), battery modules, inverter, converter, and various structural adhesive applications and various thermally conductive applications.

### Examples

### Materials

2k epoxide resin based TEROSON 5056 from Henkel AG & Co. KGaA
thermal conductive adhesive (TCA, Henkel developing product)
Bonderite M-NT 1455 W Wipes from Henkel AG & Co. KGaA
glass pearl (d= 1 mm) from VWR
isopropanol (iPrOH) from Labormagazin, Rötzmeier

The substrates - e-coated steel (Rocholl e-coated Stahlprüfkörper #50725) substrates size of 100 mm x 25 mm x 1.8mm and aluminum 3003 (AI3003, Rocholl Aluminiumprüfkörper #77467) having the following dimensions 100 mm x 25 mm x 2.6mm. The substrates were pre-treated by rubbing with a piece of paper socked in iPrOH and let dry. For the Al3003 substrates an additional wiping step using Bonderite M-NT 1455 W Wipes was carried out for cleaning and preparation of the surface removing the undesired oxidation layer.

### Test methods:

Lap shear strength was measured according to STM 700.

Tensile shear strength was measured according to ASTM D1002.

The tensile lap shear strength was measured according to ISO 4587.

Substrates were prepared as follow for the measurements: After the substrates (from now on called as "specimens") were pretreated as reported above, the specimens were assembled using the following procedure. Half of the pretreated specimens were bar-coated with a 120µm micron guide with the thermally debondable primer composition according to the present invention (formula details in table 1). The coated specimens were cured using a Loctite UV-LED curing chamber equipped with a 365nm LED, for an irradiation period of 150 seconds and a measured intensity of 320 mW/cm². Once the samples were cured, for the coated specimens, the coating thickness resulted to be 114 ± 11.7 µm; the adhesive was applied (together with glass beads to provide a bondline thickness of 1mm) on the top part of the spacemen for an area 2.5 cm x 1 cm on the same side of the thermally debondable primer composition according to the present invention using a wooden spatula. A second specimen, not coated and only cleaned with iPrOH and/or Bonderite wipes, was first added a small amount of adhesive (2.5 cm x 0.2 cm) and faced with the first specimen containing the adhesive, and after removing the excess adhesive, it was locked using two clamps. After repeating this procedure for all the specimens, all the samples were cured in the oven at 60°C for two hours.

Composition details of the thermally debondable primer composition according to the present invention (composition 1) are listed in table 1 below. The composition was prepared by mixing the components together.

**Table 1**

| **Material** | **Wt. %** |
|---|---|
| Omnirad TPOL from IGM | 1.60 |
| Isobornyl acrylate from OSAKA | 21.07 |
| Hydroxyethyl methacrylate from GEO | 9.0 |
| Block Resin 1-112 from Henkel AG & Co. KGaA | 42.15 |
| Acrylic acid from ARKEMA | 4.01 |
| Silquest A-187 Silane from EVONIK | 1.60 |
| Irgacure 184 from IGM | 1.60 |
| Expancel 031DU40 from Nouryon | 18.97 |
| | 100.00 |

### Example 1 Tensile Shear Strength in the range temperature -40°C/130°C of TEROSON EP 5065 and thermally debondable primer composition according to the present invention on e-coated metal

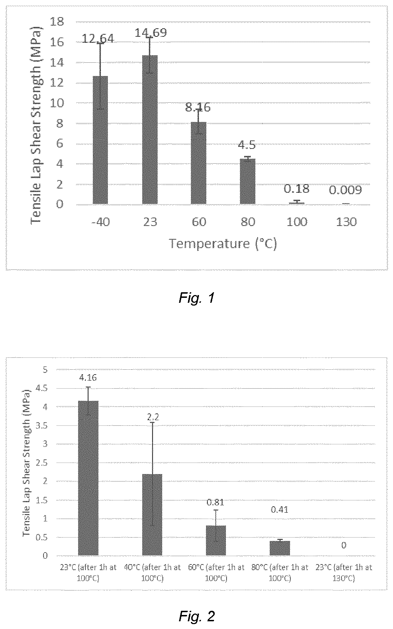

The Lap Shear Strength of TEROSON EP 5065 in combination with the composition 1 on e-coated steel specimens was measured in the temperature range of -40°C/130°C. The results are illustrated in Figure 1.

The Tensile Shear Strength dropped to 4.5 MPa above 80°C, probably due to the weak strength of the adhesive and primer above those temperatures. However, above 100°C it was recorded a decreasing of strength of 99% explained by the bond line breaking due to the expandible microsphere contained in the composition 1.

The efficiency of the composition 1 was evaluated also while the specimens was cooled down to room temperature. The results are illustrated in Figure 2. The debonding efficiency decreased with the decreasing of temperature until 72% efficiency at room temperature. In all the case, an adhesive failure was registered.

### Example 2 Evaluation of the temperature propagation in a battery cell during debonding as main application for this technology

During the debonding of battery modulus critical aspect is that the battery cell does not pass temperature of 70°C during the debonding procedure. For this reason, it was carried out a preliminary debonding test using an empty battery case and monitoring the temperature during the experiment.

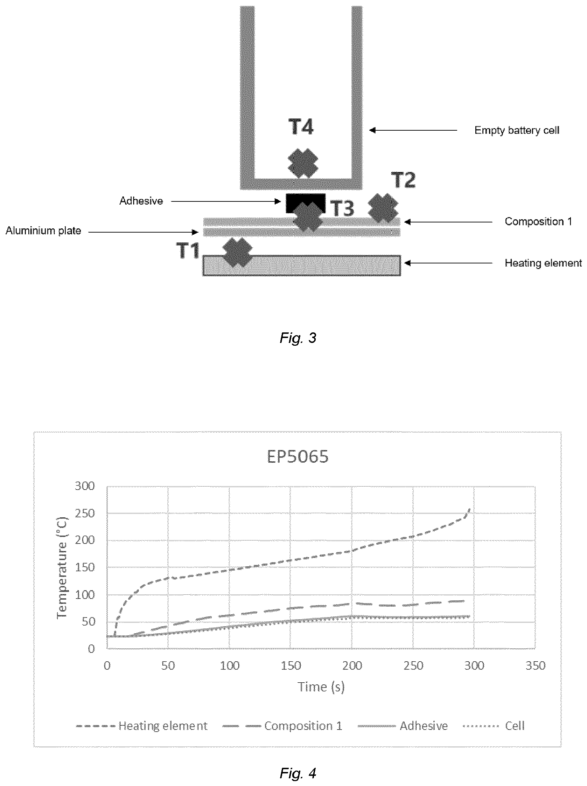

The setup used in the experiment is illustrated in Figure 3. In the bottom part is represented the heating element used to heat the primer and the cell. After, there is an aluminium plate of 1 mm thickness needed to apply the composition 1. On top of the composition 1 there is the structural adhesive TEROSON EP 5065, having 1 mm thickness. On top of everything there is the empty battery cell of aluminium having 0.5 mm thickness. T1 is the temperature of the heating element, T2 is the temperature of the UV primer, T3 is the temperature of the adhesive layer and T4 is the temperature of the battery cell.

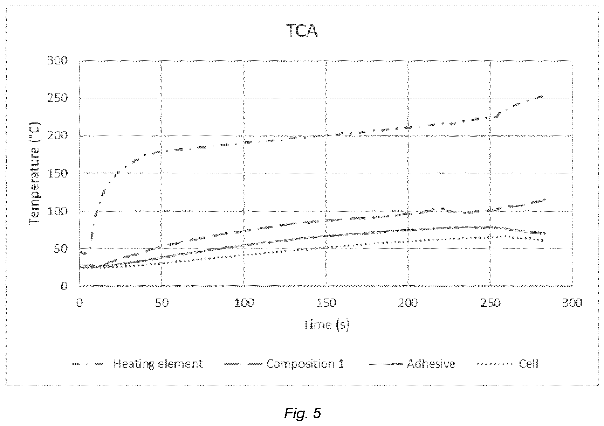

The experiment was carried out using composition 1 layer of 200 µm dry in combination with a structural adhesive (TEROSON EP 5065), or a thermal adhesive (Henkel developing product). It was interesting to notice that once the composition 1 expanded (around 90-100°C) due to the expansion of the expandible microsphere (around 200 s in Figure 4 and 5), the battery cell was thermal insulated. Despite the temperature of the heating element was increasing, the battery cell stayed below 70°C (Figure 4 and 5).

## Claims

1. A thermally debondable primer composition comprising
a) a polyether urethane methacrylate resin;
b) two or more (meth)acrylate monomers;
c) thermally expandable thermoplastic microspheres; and
d) one or more photoinitiator.

2. The thermally debondable primer composition according to claim 1, wherein the polyether urethane methacrylate resin is derived from polyether polyol, hydrogenated bisphenol A and 2,4-toluene diisocyanate with methacrylate functionality.

3. The thermally debondable primer composition according to claim 1 or 2, wherein the polyether urethane methacrylate resin is present from 30 to 55% by weight of the total weight of the composition, preferably from 35 to 50% and more preferably from 37 to 47%.

4. The thermally debondable primer composition according to any of claims 1 to 3, wherein the two or more (meth)acrylate monomers are selected from the group consisting of butyl (meth)acrylate, pentyl (meth)acrylate, hexyl (meth)acrylate, heptyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobutyl (meth)acrylate, isopentyl (meth)acrylate, isohexyl (meth)acrylate, isoheptyl (meth)acrylate, isooctyl (meth)acrylate, 2-ethylhexyl (meth)acrylate, sec-butyl (meth)acrylate, 1-methylbutyl (meth)acrylate, 1-ethylpropyl (meth)acrylate, tetrahydrofurfuryl (methacrylate), isobornyl (meth)acrylate, alkoxylated tetrahydrofurfuryl (meth)acrylate, cyclic trimethylolpropane formal acrylate, 2-phenoxyethyl (meth)acrylate, alkoxylated nonylphenol acrylate, alkoxylated phenol acrylate, 2-(2-ethoxyethoxy) ethyl (meth)acrylate, alkoxylated lauryl acrylate, stearyl (meth)acrylate, isodecyl (meth)acrylate, caprolactone (meth)acrylate, methoxy polyethylene glycol (350) monoacrylate and methoxy polyethylene glycol (550) monoacrylate, polyethylene glycol di(meth)acrylate, tetrahydrofuran (meth)acrylate, hydroxypropyl (meth)acrylate, hydroxyethyl (meth)acrylate, (meth)acrylic acid, itaconic acid, hexanediol di(meth)acrylate, trimethylol propane tri(meth)acrylate, diethylene glycol dimethacrylate, triethylene glycol dimethacrylate, tetraethylene glycol di(meth)acrylate, dipropylene glycol di(meth)acrylate, di-(pentamethylene glycol) di(meth)acrylate, tetraethylene diglycol di(meth)acrylate, diglycerol tetra(meth)acrylate, tetramethylene di(meth)acrylate, ethylene di(meth)acrylate, neopentyl glycol di(meth)acrylate, ethoxylated bisphenol-A (meth)acrylate, and mixtures thereof, preferably selected from the group consisting of isobornyl (meth)acrylate, hydroxyethyl (meth)acrylate, (meth)acrylic acid, itaconic acid, and mixtures thereof, and more preferably selected from isobornyl (meth)acrylate, hydroxyethyl (meth)acrylate, (meth)acrylic acid, and mixtures thereof, and even more preferably two or more (meth)acrylate monomers are isobornyl acrylate, acrylic acid and hydroxyethyl methacrylate.

5. The thermally debondable primer composition according to any of claims 1 to 4, wherein the two or more (meth)acrylate monomers are present from 20 to 50% by weight of the total weight of the composition, preferably from 25 to 45%, preferably from 27 to 41% and more preferably from 30 to 38%.

6. The thermally debondable primer composition according to any of claims 1 to 5, wherein the thermally expandable thermoplastic microspheres have a core-shell structure, and wherein the shell is formed from cross-linked polymer and the core is composed of a blowing agent.

7. The thermally debondable primer composition according to any of claims 1 to 6, wherein the thermally expandable thermoplastic microspheres expand when exposed to a heat, preferably exposed to a heat of from 60 to 200°C, preferably from 80 to 160 °C, more preferably from 80 to 130°C.

8. The thermally debondable primer composition according to any of claims 1 to 7, wherein the thermally expandable thermoplastic microspheres have a particle size from 5 to 100 µm, preferably from 8 to 75 µm, preferably from 9 to 50 µm, more preferably from, 10 to 30 µm, more preferably from 12 to 20 µm, and even more preferably from 13 to 19 µm, wherein the particle size is measure by laser diffraction (Low Angle Laser Light Scattering LALLS).

9. The thermally debondable primer composition according to any of claims 1 to 8, wherein the thermally expandable thermoplastic microspheres are present from 5 to 30% by weight based on the total weight of the composition, preferably from 10 to 27%, preferably from 12 to 25% and more preferably from 14 to 22%.

10. The thermally debondable primer composition according to any of claims 1 to 9, wherein the one or more photoinitiators are selected from the group consisting of 1-hydroxycyclohexyl phenyl ketone, ethyl(2,4,6-trimethylbenzoyl)-phenyl) phosphinate, 2-hydroxy-2-methyl-1-phenyl-propan-1-one, bis(2,4,6-trimethylbenzoyl)-phenylphosphineoxide, 1-hydroxy-cyclohexyl-phenyl-ketone, 2,4,6-trimethylbenzoyl-diphenyl-phosphineoxide, 2-methyl-1-[4-(methylthio)phenyl]-2-morpholino propan-1-one, 2-benzyl-2-N,N-dimethylamino- 1-(4-morpholinophenyl)-1-butanone, combination of 1-hydroxy cyclohexyl phenyl ketone and benzophenone, 2,2-dimethoxy-2-phenyl acetophenone, 2-hydroxy-2-methyl-1-phenyl-1-propane, combination of 2,4,6-trimethylbenzoyldiphenyl-phosphine oxide and 2-hydroxy-2-methyl-1-phenyl-propan-1-one, 1-[4-(2-hydroxyethoxy)-phenyl]-2-hydroxy-2-methyl-1-propane-1-one, combination of 50 wt. % of diphenyl (2,4,6-trimethylbenzoyl) phosphine oxide and 50 wt. % of 2-hydroxy-2-methyl-1-phenyl-1-propanone, combination of bis(2,6-dimethoxybenzoyl-2,4,4-trimethylpentyl)phosphine oxide and 2-hydroxy-2-methyl-1-phenyl-propan-1-one, bis(η<5>-2,4-cyclopentadien-1-yl)-bis[2,6-difluoro-3-(1H-pyrrol-1-yl)phenyl]titanium, 2-benzyl-2-N,N-dimethylamino-1-(4-morpholinophenyl)-1-butanone, dl-camphorquinone, and mixtures thereof, preferably selected from ethyl(2,4,6-trimethylbenzoyl)-phenyl) phosphinate, 1-hydroxycyclohexyl phenyl ketone, 2-hydroxy-2-methyl-1-phenyl-propan-1-one, bis(2,4,6-trimethylbenzoyl)-phenylphosphineoxide, 1-hydroxy-cyclohexyl-phenyl-ketone, 2,4,6-trimethylbenzoyl-diphenyl-phosphineoxide, and mixtures thereof, and more preferably selected from ethyl(2,4,6-trimethylbenzoyl)-phenyl) phosphinate, 1-hydroxycyclohexyl phenyl ketone and mixtures thereof.

11. The thermally debondable primer composition according to any of claims 1 to 10, wherein the one or more photoinitiators are present from 0.5 to 10 % by weight based on the total weight of the composition, preferably from 1.25 to 8%, more preferably from 1.5 to 5%.

12. Cured thermally debondable primer composition according to any of claims 1 to 11, wherein the thermally debondable primer composition is cured via photo-curing.

13. Use of thermally debondable primer composition according to any of claims 1 to 11 or cured product according to claim 12 in a bonded structure.

14. A bonded structure comprising:
a first substrate;
a second substrate;
a thermally debondable primer composition layer according to any one of claims 1 to 11 or cured product layer according to claim 12; and
an adhesive layer,
wherein the thermally debondable primer is disposed on a surface of the first substrate and/or on a surface of the second substrate and wherein the adhesive layer is placed on top of the thermally debondable primer layer.

15. The bonded structure according to claim 14, wherein the adhesive layer is formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

16. A method of debonding the bonded structure according to claims 14 or 15, the method comprising the steps of:
i) applying a heat; and,
ii) debonding the surface,
wherein the temperature applied in step i) is preferably from 60 to 200°C, and it is preferably applied for a duration of from 2 minutes to 60 minutes.
